# EUROPÄISCHE PATENTSCHRIFT

(11) **EP 4 273 637 B1**
(45) Veröffentlichungstag und Bekanntmachung des Hinweises auf die Patenterteilung: **04.02.2026**
(21) Anmeldenummer: 23187404.1
(22) Anmeldetag: 09.02.2018
(51) Int. Cl.: G05B 15/02, E03D 5/10, E03D 13/00, E03C 1/05, G05B 19/042

(54) **PAIRINGVERFAHREN**
PAIRING METHOD
PROCÉDÉ D'APPARIEMENT

(43) Veröffentlichungstag der Anmeldung: 08.11.2023
(62) Teilanmeldung aus: 18156055.8
(73) Patentinhaber: Geberit International AG, 8645 Jona (CH)
(72) Erfinder: RAISSLE, Daniel, 8852 Altendorf (CH); OBERHOLZER, Roland, 8610 Uster (CH); CODIROLI, Mattia, 8808 Pfäffikon SZ (CH); DIENER, Heinz, verstorben (CH)
(74) Vertreter: Frischknecht, Harry Ralph

(56) Entgegenhaltungen:
- DE-B3- 102014 201 468
- US-A1- 2013 307 669
- US-A1- 2017 235 317
- SONOS: "Sonos System Setup", 1 November 2015 (2015-11-01), XP055777379, Retrieved from the Internet <URL:www.epo.org> [retrieved on 20210218]
- SONOS: "Sonos� Digital Music System", 1 June 2007 (2007-06-01), pages 1 - 193, XP055777386, Retrieved from the Internet <URL:www.epo.org> [retrieved on 20210217]

## Beschreibung

### TECHNISCHES GEBIET

Die vorliegende Erfindung betrifft ein Verfahren zur Verbindung einer Sanitärartikelsteuerung ausgewählt aus einer Gruppe von mindestens einer Sanitärartikelsteuerung, insbesondere ausgewählt aus einer Gruppe von mindestens zwei Sanitärartikelsteuerungen,

### STAND DER TECHNIK

Sanitärartikelsteuerungen dienen der Auslösung einer Funktion an einem Sanitärartikel. Beispielsweise dienen derartige Steuerungen der Auslösung einer Toiletten- oder Urinalspülung oder die Steuerung des Wasserflusses bei einer Auslaufarmatur. Typischerweise sind derartige Sanitärartikelsteuerungen mit einem Erfassungssensor ausgebildet, welche einen anwesenden Benutzer erfassen. Basierend auf dieser Erfassung wird beispielsweise ein Ventil eines Sanitärartikels angesteuert. Die Ansteuerung von anderen Elementen, wie beispielsweise das Ansteuern einer Lichtquelle, die mit dem Sanitärartikel in Verbindung steht, ist auch denkbar.

Bis anhin war die Konfiguration von derartigen Sanitärartikelsteuerungen mit einem sogenannten Servicegerät oder Servicehandy möglich, wobei meist eine drahtgebundene Verbindung oder eine Infrarotverbindung mit einer entsprechenden Sanitärartikelsteuerung hergestellt wurde. Typischerweise ist für die Infrarotverbindung eine separate IR-Diode an der Sanitärartikelsteuerung vorgesehen. Obwohl sich dieses Vorgehen in der Praxis bei den Sanitär-Installateuren sehr bewährt hat, ergehen diverse Nachteile. Einerseits ist die Wartung von Grossanlagen, wie auf Bahnhöfen, Flughäfen, Bürogebäuden, sehr aufwändig, da das Servicegerät mit jeder einzelnen Sanitärartikelsteuerung eine separate Verbindung herstellen muss. Andererseits ist die Konfiguration im privaten Bereich durch Privatpersonen praktisch verunmöglicht, da sich Privatpersonen derartige Servicegeräte typischerweise nicht anschaffen. US2017235317A1 offenbart ein Wassermanagementverfahren zur Steuerung wenigstens eines Betriebsparameters wenigstens einer Wassersteuerungsvorrichtung.

### DARSTELLUNG DER ERFINDUNG

Ausgehend von diesem Stand der Technik liegt der Erfindung eine Aufgabe zugrunde, ein Verfahren anzugeben, welches die Nachteile des Standes der Technik überwindet. Insbesondere soll ein Verfahren angegeben werden, welches die einfache und sichere Verbindung zwischen einem Computer und einer Sanitärartikelsteuerung erlaubt.

Diese Aufgabe löst der Gegenstand von Anspruch 1. Die Erfindung wird durch die angehängten Ansprüche definiert. Demgemäss dient ein Verfahren zur Verbindung einer Sanitärartikelsteuerung ausgewählt aus einer Gruppe von mindestens einer Sanitärartikelsteuerung mit einem Computer. Insbesondere dient das Verfahren zur Verbindung einer Sanitärartikelsteuerung ausgewählt aus einer Gruppe von mindestens zwei oder mehreren Sanitärartikelsteuerung mit einem Computer. Die Sanitärartikelsteuerung ist zur Steuerung einer Funktion eines Sanitärartikels konfiguriert und umfasst mindestens einen Prozessor, eine mit dem Prozessor wirkverbundene drahtlose Kommunikationsschnittstelle und eine mit dem Prozessor wirkverbundene Eingabeschnittstelle. Der Computer umfasst mindestens einen Prozessor, eine mit dem Prozessor wirkverbundene drahtlose Kommunikationsschnittstelle und einen mit dem Prozessor wirkverbundenen Bildschirm. Für die Datenverbindung zwischen der zu verbindenden Sanitärartikelsteuerung und dem Computer wird ein Pairingvorgang durchgeführt. Während dem Pairingvorgang wird die Eingabeschnittstelle der zu verbindenden Sanitärartikelsteuerung betätigt, aufgrund welcher Betätigung die Datenverbindung zwischen der Kommunikationsschnittstelle der besagten Sanitärartikelsteuerung und der Kommunikationsschnittstelle des Computers hergestellt wird. Die Datenverbindung ist dabei derart hergestellt, dass Daten zwischen dem Prozessor der Sanitärartikelsteuerung und dem Prozessor des Computers austauschbar sind.

Durch die Betätigung der Eingabeschnittstelle durch den Benutzer wird sichergestellt, dass die vom Benutzer gewünschte Sanitärartikelsteuerung mit dem Computer verbunden wird und dass keine andere, vom Benutzer nicht erwünschte, Sanitärartikelsteuerung mit dem Computer verbunden wird. Je nach Ausgestaltung der Eingabeschnittstelle kann die Eingabeschnittstelle die physische Präsenz des Benutzers im Raum, in welchem die Sanitärartikelsteuerung vorhanden ist, erforderlich sein, was die Sicherheit erhöht.

Bei den Anlagen, insbesondere bei den Grossanlagen, heisst dies, dass die mit der Wartung betraute Person, die zu wartende Sanitärartikelsteuerung mit seinem Computer verbinden kann und dass alle anderen sich in Reichweite befindlichen, aber nicht zu wartenden, Sanitärartikelsteuerungen nicht mit dem Computer verbunden.

Bei Sanitärartikelsteuerungen im privaten Bereich heisst dies, dass der Benutzer durch Betätigen der Eingabeschnittstelle sehr einfach eine Verbindung zwischen der Sanitärartikelsteuerung und dem Computer herstellen kann, wobei alle anderen sich in Reichweite des Computers befindlichen Sanitärartikelsteuerungen oder andere Geräte, wie Lautsprecher oder ähnliche Geräte, eben nicht verbunden werden.

Die Ausdrucksweise, dass die Sanitärartikelsteuerung zur Steuerung einer Funktion an einem Sanitärartikel konfiguriert bzw. ausgebildet ist, ist so zu verstehen, dass die Sanitärartikelsteuerung mit einem Sanitärartikelaktuator in einer Wirkverbindung steht und den Sanitärartikelaktuator entsprechend ansteuert. Der Sanitärartikelaktuator ist beispielsweise ein Wasserventil einer Auslaufarmatur, ein Spülventil eines Urinals oder einer Toilette oder ein Wasserventil für ein Dusch-WC. Der Sanitärartikelaktuator kann aber auch eine am Sanitärartikel angeordnete Lichtquelle oder die Heizung eines Toilettensitzes sein. Andere Sanitärartikelaktuatoren sind ebenfalls denkbar.

Unter der Ausdrucksweise "Sanitärartikel" werden sämtliche in einem Sanitärraum zu platzierende Elemente, welche eine sanitäre Funktion erfüllen, verstanden. Insbesondere wird unter der Ausdrucksweise "Sanitärartikel" ein Urinal, eine Toilettenschüssel, ein Waschtisch, eine Betätigungsplatte, eine Sanitärarmatur, ein Montagegestell mit integriertem Sanitärartikelaktuator, ein Dusch-WC und/oder ein Dusch-WC-Aufsatz verstanden.

Die Daten sind vorzugsweise Steuerungsdaten und/oder Zustandsdaten und/oder Messdaten und/oder Parameterdaten sind.

Unter der Ausdrucksweise "Computer" wird ein Personal Computer, ein Notebook, ein Mobiltelefon, ein Tablet, ein Smartphone, eine Smartwatch oder ein ähnliches Gerät verstanden. Der Computer ist dabei derart konfiguriert, dass die beschriebenen Verfahrensschritte ausführbar sind.

Unter der Ausdrucksweise "Prozessor" wird ein Verarbeitungselement verstanden, welches derart konfiguriert ist, dass die beschriebenen Verfahrensschritte ausführbar sind.

Unter der Ausdrucksweise "drahtlose Kommunikationsschnittstelle" wird eine Schnittstelle verstanden, über welche Daten zwischen dem Computer und der Sanitärartikelsteuerung ausgetauscht werden. Insbesondere zwischen dem Prozessor des Computers und dem Prozessor der Sanitärartikelsteuerung. Die drahtlose Kommunikationsschnittstelle wird vorzugsweise mit drahtlosen Protokollen betrieben, welche im Radiofrequenzbereich liegen. Die drahtlose Kommunikationsschnittstelle kann mit unterschiedlichen drahtlosen Protokollen betrieben werden. Beispielhaft wird hier Bluetooth, ZigBee, Wireless-Lan und NFC genannt.

Vorzugsweise ist die Eingabeschnittstelle gemäss einer ersten Ausführung ein an der Sanitärartikelsteuerung angeordneter Erfassungssensor, der zur Erkennung eines Benutzers eines mit der Sanitärartikelsteuerung verbundenen Sanitärartikels ausgebildet ist. Der Benutzer kann beispielsweise durch eine Handbewegung oder ein Hineintreten in den Erfassungssensor den Erfassungssensor während des Pairingsvorgangs betätigen. Diese Ausbildung ist besonders vorteilhaft, weil ein Sensor eingesetzt werden kann, welcher ohnehin schon im Zusammenhang mit der Sanitärartikelsteuerung angeordnet ist. Eine Anordnung von einem zusätzlichen Element für den Pairingvorgang ist in dieser bevorzugten Ausführungsform demnach nicht nötig.

Der Erfassungssensor ist beispielsweise ein Infrarotsensor. Alle anderen Arten von Sensoren, die eine physische Anwesenheitskontrolle des Benutzers sicherstellen, sind auch denkbar. Das heisst der Erfassungssensor dient im Wesentlichen dazu, den berechtigten Benutzer im Raum, in welchem die Sanitärartikelsteuerung angeordnet ist zu erfassen. Hierdurch kann die Sicherheit bezüglich unautorisierten Verbindungen erhöht werden.

Besonders bevorzugt ist die Sanitärartikelsteuerung derart konfiguriert, dass während des Pairingvorgangs bei Betätigung des Erfassungssensors keine sanitäre Funktion ausgeführt wird. Beispielsweise wird keine Toilettenspülung oder eine Urinalspülung ausgelöst. Alternativerweise ist die Sanitärartikelsteuerung derart konfiguriert, dass während des Pairingvorgangs bei Betätigung des Erfassungssensors gleichwohl eine sanitäre Funktion ausgeführt ist. Durch die Auslösung einer sanitären Funktion kann dem Benutzer beispielsweise die erfolgreiche Verbindung signalisiert werden.

Gemäss einer zweiten Ausführung ist die Eingabeschnittstelle eine an der Sanitärartikelsteuerung angeordnete Taste. Die Taste kann eine spezifisch für den Pairingvorgang angeordnete Taste sein oder aber eine ohnehin im Zusammenhang mit der Sanitärartikelsteuerung bzw. mit dem Sanitärartikel angeordnete Taste, wie eine Taste zur Auslösung einer Spülung oder eine Taste zur Auslösung einer Funktion an einem Dusch-WC sein.

Gemäss einer dritten Ausführung ist die Eingabeschnittstelle ein Mikrofon, welches durch Sprache oder akustische Signale ansteuerbar ist. Das heisst der Benutzer kann die Eingabeschnittstelle durch Spracheingabe ansteuern. Beispielsweise kann der Benutzer die Eingabeschnittstelle durch Aussprechen eines Wortes, wie "Geberit", oder eines Satzes, wie "Know How Installed" ansteuern.

Vorzugsweise wird vor dem Pairingvorgang dem Benutzer die Art der verfügbaren Sanitärartikelsteuerungen auf dem Bildschirm angezeigt, wobei der Benutzer in einem Selektionsschritt die von ihm gewünschte Art der Sanitärartikelsteuerung auswählt und wobei anschliessend der Pairingvorgang basierend auf der Benutzerwahl in der Gruppe der vom Benutzer gewünschten Art der Sanitärartikelsteuerung durchgeführt wird. Es wird dem Benutzer somit eine Gruppe bzw. Untergruppe der maximal verfügbaren Sanitärartikelsteuerungen angezeigt, was gerade bei Grossanlagen mit einer grossen Zahl von Sanitärartikelsteuerungen von Vorteil ist.

In einer ersten Variante des Pairingvorgangs werden auf dem Bildschirm des Computers alle verfügbaren Sanitärartikelsteuerungen angezeigt. Der Benutzer betätigt die Eingabeschnittstelle und dem Benutzer wird anschliessend die entsprechende Sanitärartikelsteuerung auf dem Bildschirm angezeigt. In einer Untervariante wird die entsprechende Sanitärartikelsteuerung automatisch, insbesondere über den Prozessor, ausgewählt und anschliessend wird die besagte Datenverbindung hergestellt. In einer anderen Untervariante wählt der Benutzer über ein Eingabemittel am Computer die angezeigte Sanitärartikelsteuerung aus und anschliessend wird die besagte Datenverbindung hergestellt.

Besonders bevorzugt wird die erste Variante unter dem Bluetooth-Technologie gehandhabt. Andere Protokolle sind aber auch denkbar.

In einer zweiten Variante des Pairingvorgangs werden während des Pairingvorgangs auf dem Bildschirm des Computers alle verfügbaren Sanitärartikelsteuerungen angezeigt, wobei der Benutzer eine der Sanitärartikelsteuerungen über ein Eingabemittel am Computer auswählt und anschliessend die entsprechende Eingabeschnittstelle betätigt, wobei bei Übereinstimmung zwischen der ausgewählten Sanitärartikelsteuerungen und der über die Eingabeschnittstelle betätigten Sanitärartikelsteuerungen die besagte Datenverbindung hergestellt wird.

In einer dritten Variante des Pairingvorgangs betätigt der Benutzer die Eingabeschnittstelle. Anschliessend wird auf dem Bildschirm die betätigte Sanitärartikelsteuerung angezeigt. Die Bestätigung der Verbindung mit dem Sanitärartikel erfolgt durch den Benutzer direkt über ein Eingabemittel am Computer.

Besonders bevorzugt erfolgt eine solche Verbindung nach der dritten Variante gemäss dem Wi-Fi-Protected-Setup Standard (WPS-Standard), wobei die Kommunikationsschnittstellen entsprechend diesem Protokoll ausgebildet sind.

In einer vierten Variante des Pairingvorgangs betätigt der Benutzer die Eingabeschnittstelle. Anschliessend wird auf dem Bildschirm die betätigte Sanitärartikelsteuerung angezeigt. Nach der Anzeige ist ein an der Sanitärartikelsteuerung angebrachtes Codemittel über ein Eingabemittel am Computer eingebbar. Das Eingabemittel ist beispielsweise eine Kamera oder eine Tastatur, wobei das Codemittel beispielsweise eine Seriennummer, ein Barcode oder ein QR-Code ist. In einem Abgleichschritt wird das eingegebene Codemittel mit einem in der Sanitärartikelsteuerung gespeicherten Codemittel abgeglichen. Bei Übereinstimmung des eingegebenen Codemittels und des abgespeicherten Codemittels wird die Verbindung zwischen der angezeigten Sanitärartikelsteuerung und dem Computer bestätigbar. Hierdurch kann die Sicherheit gegenüber Missbrauch weiter erhöht werden.

Durch die beschriebenen Varianten und die verschiedenen Ausführungsformen ist es möglich die Sicherheit des Pairingvorgangs zu skalieren. So kann beispielsweise eine tiefe oder eine hohe Sicherheit gewählt werden.

Die Ausdrucksweise "alle verfügbaren Sanitärartikelsteuerungen" schliesst bei allen genannten Varianten alle sich in Reichweite des Computers befindlichen Sanitärartikelsteuerungen sowie alle Sanitärartikelsteuerungen der besagten gruppe bzw. Untergruppe mit ein.

Das Eingabemittel des Computers ist mit dem Prozessor wirkverbunden und ist beispielsweise eine Tastatur oder ein Touchscreen oder eine Kamera oder ein Barcodescanner.

Vorzugsweise wird die Eingabeschnittstelle durch den Benutzer händisch betätigt. Die händische Betätigung wird vorzugsweise im laufenden Betrieb ausgeführt, wobei diese Art der Betätigung vorteilhaft ist, weil der Benutzer physisch im Raum, in welchem die Sanitärartikelsteuerung präsent sein muss.

Vorzugsweise wird die Eingabeschnittstelle bei erstmaliger oder bewusst für den Pairingvorgang unterbrochener und wiederhergestellter Stromversorgung der Sanitärartikelsteuerung automatisch für ein bestimmtes Zeitfenster aktiviert. Das heisst mit anderen Worten, dass die Eingabeschnittstelle während eines Power-Up-Modus der Sanitärartikelsteuerung für den Pairingvorgang aktiv ist. Das bestimmte Zeitfenster hat vorzugsweise eine Zeitdauer von einigen Minuten, beispielsweise von 1 Minute bis 15 Minuten. Während dieser Zeit kann der Installateur mit seinem Computer eine entsprechende Datenverbindung einfach herstellen. Die bewusste Unterbrechung der Stromversorgung hat den zusätzlichen Vorteil, dass der Sanitärinstallateur Zugang zu weiteren mit dem Gebäude in Verbindung stehenden Räumen haben muss, was das Missbrauchspotential weiter minimiert. Die Sicherheit kann hier noch weiter erhöht werden, wenn der Sanitärinstallateur nach Herstellen der Stromversorgung noch ein Passwort eingeben muss.

Vorzugsweise wird die Datenverbindung ausschliesslich zwischen der einen vom Benutzer gewünschten Sanitärartikelsteuerung und dem Computer hergestellt. Es wird demnach genau eine einzige Sanitärartikelsteuerung mit dem Computer verbunden, was den Vorteil hat, dass immer klar ist, welche der Sanitärartikelsteuerungen durch den Benutzer konfiguriert werden wird. Alternativerweise ist es auch möglich, dass die Datenverbindung ausschliesslich zwischen mehreren vom Benutzer gewünschten Sanitärartikelsteuerungen und dem Computer hergestellt wird.

Vorzugsweise ist nach dem Herstellen der Datenverbindung über ein Eingabemittel des Computers ein Passwort für den Zugang zu der Sanitärartikelsteuerung festlegbar, wobei das Passwort über die Datenverbindung an die Sanitärartikelsteuerung übermittelt wird und in einem mit dem Prozessor wirkverbundenen Speicher abgespeichert wird.

Das Passwort wird vorzugsweise verschlüsselt übertragen und abgespeichert.

Vorzugsweise ist nach dem Herstellen der Datenverbindung über ein Eingabemittel des Computer eine benutzerspezifische Bezeichnung für die gewählte Sanitärartikelsteuerung festlegbar ist, wobei die Bezeichnung über die Datenverbindung an die Sanitärartikelsteuerung übermittelt wird und in einem mit dem Prozessor wirkverbundenen Speicher abgespeichert wird.

Die Bezeichnung kann eine Bezeichnung sein, welche leicht vom Benutzer gemerkt werden kann und/oder welche dem Benutzer weiter Information, wie Standort, etc. gibt.

Vorzugsweise werden von der Sanitärartikelsteuerung Daten bezüglich der Art der Sanitärartikelsteuerung an den Computer übermittelt, wobei basierend auf diesen Daten durch den Prozessor des Computers der Gerätespeicher des Sanitärartikelsteuerung oder eine Datenbank abgefragt wird und dabei weitergehende Informationen über die Sanitärartikelsteuerung auf dem Bildschirm eingeblendet werden. Die Datenbank kann beispielsweise über ein Computernetzwerk, wie das Internet, abgefragt werden

Die weitergehende Information kann beispielsweise eine Abbildung der Sanitärartikelsteuerung und/oder des mit der Sanitärartikelsteuerung gesteuerten Sanitärartikels und/oder technische Daten über die Sanitärartikelsteuerung und/oder Konfigurationsdaten der Sanitärartikelsteuerung und/oder eine Bedienungsanleitung oder ähnliches sein.

Vorzugsweise wird die Sanitärartikelsteuerung bzw. werden die Sanitärartikelsteuerungen, mit welchen bereits erstmalig ein Pairingvorgang stattgefunden hat, auf dem Bildschirm des Computers angezeigt, sobald der Computer in Reichweite der Sanitärartikelsteuerung bzw. der Sanitärartikelsteuerungen ist, wobei für die erneute Herstellung der Datenverbindung der Benutzer die entsprechende Sanitärartikelsteuerung bzw. die entsprechenden Sanitärartikelsteuerungen über ein Eingabemittel am Computer auswählt, und wobei nach Auswahl der Sanitärartikelsteuerung bzw. den Sanitärartikelsteuerungen die besagte Datenverbindung wieder, ohne erneutes Pairing, hergestellt wird. Hierdurch wird ein Verfahren für eine einfache erneute Verbindung geschaffen.

Ein System, insbesondere ein Computersystem, dient der Verbindung einer Sanitärartikelsteuerung ausgewählt aus einer Gruppe von mindestens einer Sanitärartikelsteuerung, insbesondere ausgewählt aus einer Gruppe von mindestens zwei Sanitärartikelsteuerungen, mit einem Computer,
wobei die Sanitärartikelsteuerung zur Steuerung einer Funktion eines Sanitärartikels konfiguriert ist und mindestens einen Prozessor, eine mit dem Prozessor wirkverbundene drahtlose Kommunikationsschnittstelle und eine mit dem Prozessor wirkverbundene Eingabeschnittstelle aufweist,
wobei der Computer mindestens einem Prozessor, eine mit dem Prozessor wirkverbundene drahtlose Kommunikationsschnittstelle und einen mit dem Prozessor wirkverbundenen Bildschirm aufweist,
wobei die Sanitärartikelsteuerung und dem Computer derart konfiguriert sind, dass für die Datenverbindung zwischen der zu verbindenden Sanitärartikelsteuerung und dem Computer ein Pairingvorgang durchführbar ist,
wobei während dem Pairingvorgang die Eingabeschnittstelle an der zu verbindenden Sanitärartikelsteuerung betätigbar ist, aufgrund welcher Betätigung die Datenverbindung zwischen der Kommunikationsschnittstelle der besagten Sanitärartikelsteuerung und der Kommunikationsschnittstelle des Computers hergestellt wird, derart, dass Daten zwischen dem Prozessor der Sanitärartikelsteuerung und dem Prozessor des Computers austauschbar sind.

Ein Computerprogrammprodukt umfasst: ein computerlesbares Medium mit darin enthaltenen Computerprogrammcodemitteln zur Steuerung eines oder mehrerer Prozessoren eines Computers, welcher Computer mindestens einem Prozessor, eine mit dem Prozessor wirkverbundene drahtlose Kommunikationsschnittstelle und einen mit dem Prozessor wirkverbundenen Bildschirm umfasst,
wobei das Computerprogrammcodemittel zur Verbindung einer Sanitärartikelsteuerung ausgewählt aus einer Gruppe von mindestens einer Sanitärartikelsteuerung, insbesondere ausgewählt aus einer Gruppe von mindestens zwei Sanitärartikelsteuerungen, mit einem Computer nach obiger Beschreibung ausgebildet ist.

Das Computerprogrammprodukt kann beispielsweise als Applikation bzw. als App auf einem Computer, insbesondere der oben genannten Art, installiert sein.

Ein Sanitärartikel umfasst eine nach dem Verfahren gemäss obiger Beschreibung betriebene Sanitärartikelsteuerung.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine schematische Ansicht einer Anlage mit mehreren Sanitärartikeln und mehreren Sanitärartikelsteuerungen;
- Fig. 2: eine Abfolge von beispielhaften Bildschirmsequenzen bei der Durchführung einer Ausführungsform eines Verfahrens gemäss der vorliegenden Erfindung; und
- Fig. 3: eine weitere Abfolge von beispielhaften Bildschirmsequenzen bei einer erneuten Verbindung zwischen Sanitärartikelsteuerung und Computer.

### BESCHREIBUNG BEVORZUGTER AUSFÜHRUNGSFORMEN

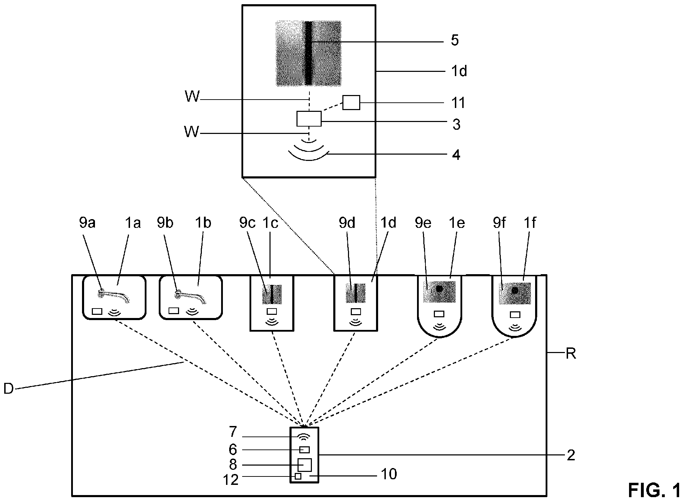

In der Figur 1 wird eine schematische Ansicht einer sanitärtechnischen Anlage gezeigt. Die Anlage umfasst in der gezeigten Ausführungsform sechs verschiedene Sanitärartikel 9a-9f mit jeweils sechs verschiedenen Sanitärartikelsteuerungen 1a-1f. Der Sanitärartikel 9a bzw. 9b mit der Sanitärartikelsteuerung 1a bzw. 1b ist eine Auslaufarmatur. Der Sanitärartikel 9c bzw. 9d mit der Sanitärartikelsteuerung 1c bzw. 1d ist ein Urinal und der Sanitärartikel 9e bzw. 9f mit der Sanitärartikelsteuerung 1e bzw. 1f ist eine Toilette. In anderen Anlagen sind weniger oder mehr Sanitärartikelsteuerungen angeordnet.

Jede der Sanitärartikelsteuerungen 1a-1f ist zur Steuerung einer Funktion des entsprechenden Sanitärartikels 9a-9f konfiguriert. Das heisst, die Sanitärartikelsteuerungen 1a, 1b dienen der Steuerung des Wasserflusses in einer Auslaufarmatur 9a, 9f, die Sanitärartikelsteuerungen 1c, 1d dienen der Auslösung einer Spülung an einem Urinal 9c, 9d und die Sanitärartikelsteuerungen 1e, 1f dienen der Auslösung einer Spülung an einer Toilette 9e, 9f. Weiter umfasst jeder Sanitärartikelsteuerung 1a-1f mindestens einen Prozessor 3, eine mit dem Prozessor 3 wirkverbundene drahtlose Kommunikationsschnittstelle 4 und eine mit dem Prozessor wirkverbundene Eingabeschnittstelle 5. Dies kann in der vergrösserten Darstellung in der Figur 1 oben gut erkannt werden. Die Wirkverbindung zwischen Prozessor 3, Kommunikationsschnittstelle 4 und Eingabeschnittstelle 5 wird mit der gestrichelten Linie W entsprechend dargestellt. Unter der Ausdrucksweise wirkverbunden wird verstanden, dass Daten oder Befehle zwischen dem Prozessor 3, der drahtlosen Kommunikationsschnittstelle 4 und der Eingabeschnittstelle 5 ausgetauscht werden können.

Der Einfachheit halber wird in der Folge lediglich noch von Sanitärartikelsteuerung und Sanitärartikel gesprochen, wobei jeweils Bezug auf alle Sanitärartikelsteuerungen 1a-1f bzw. Sanitärartikel 9a-9f genommen wird.

Weiter wird in der Figur 1 ein Computer 2 gezeigt. Der Computer 2 befindet sich hier im gleichen Raum R, in welchem auch die Sanitärartikelsteuerungen 1a-1f bzw. die entsprechenden Sanitärartikel 9a- 9f angeordnet sind. Der Computer 2 umfasst mindestens einen Prozessor 6, eine mit dem Prozessor 6 wirkverbundene drahtlose Kommunikationsschnittstelle 7 und einen mit dem Prozessor 6 wirkverbundenen Bildschirm 8. Der Computer 2 kann beispielsweise ein Mobiltelefon oder ein Tablet oder eine andere Art von Computer sein, sowie dies in der allgemeinen Beschreibung erläutert wird.

In der gezeigten Ausführungsform soll nun die Sanitärartikelsteuerung 1a mit dem Computer 2 über eine Datenverbindung D verbunden werden. Die Datenverbindung D ist in der Figur 1 gestrichelt dargestellt. Für die Datenverbindung D zwischen der zu verbindenden Sanitärartikelsteuerung 1a und dem Computer 2 wird ein Pairingvorgang durchgeführt. Während dem Pairingvorgang wird die Eingabeschnittstelle 5 an der zu verbindenden Sanitärartikelsteuerung 1a betätigt. Aufgrund dieser Betätigung wird die Datenverbindung D zwischen der Kommunikationsschnittstelle 4 der besagten Sanitärartikelsteuerung 1a und der Kommunikationsschnittstelle 7 des Computers 2 hergestellt. Die Datenverbindung D ist dabei derart ausgebildet, dass Daten zwischen dem Prozessor 3 der Sanitärartikelsteuerung 1a und dem Prozessor 6 des Computers 2 austauschbar sind. Die Daten können beispielsweise Konfigurationsdaten, Zustandsdaten, gespeicherte Daten, oder jede andere Art von Daten sein. Durch diesen Pairingvorgang kann eine einfache Verbindung zwischen dem Computer 2 und der gewünschten Sanitärartikelsteuerung 1a hergestellt werden.

In der gezeigten Ausführungsform ist die Eingabeschnittstelle 5 ein an der Sanitärartikelsteuerung 1a angeordnete Erfassungssensor. Der Erfassungssensor dient nicht nur als Eingabeschnittstelle 5 für den Pairingvorgang, sondern auch zur Erkennung eines Benutzers, der einen mit der Sanitärartikelsteuerung verbundenen Sanitärartikel 9 benützen möchte. Der Erfassungssensor ist typischerweise ein Infrarotsensor, welcher bei Erkennung eines Benutzers ein Signal für die Sanitärartikelsteuerung 1a bis 1f bereitstellt, wobei diese dann ein Funktionselement, wie beispielsweise ein Wasserventil oder ein Spülventil, des Sanitärartikels 9a bis 9f ansteuert, wodurch eine sanitäre Funktion, wie ein Wasserauslass oder ein Spülen ausgelöst wird.

Die Sanitärartikelsteuerung 1a-1f ist vorzugsweise derart konfiguriert, dass während dem Pairingvorgang bei Betätigung des Erfassungssensors 5 keine sanitäre Funktion ausgeführt wird. Hierdurch kann beispielsweise der Gebrauch von Wasser optimiert werden. Alternativerweise kann die Sanitärartikelsteuerung 1a-1f derart konfiguriert sein, dass während des Pairing-Vorgangs bei Betätigung des Erfassungssensors 5 gleichwohl eine sanitäre Funktion ausgeführt wird. Dies insbesondere mit dem Zweck, dem Sanitärinstallateur etwas zu signalisieren.

Die Eingabeschnittstelle kann aber auch eine an der Sanitärartikelsteuerung 1a bis 1f angeordnete Taste sein oder aber ein Mikrofon, welches durch Sprache oder akustische Signale ansteuerbar ist.

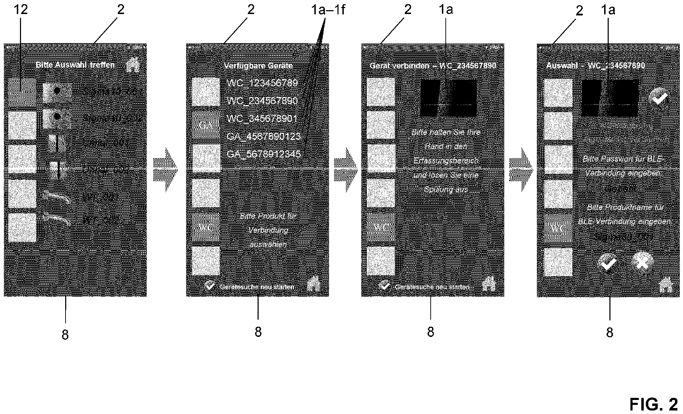

In der Figur 2 wird beispielhaft eine Abfolge von verschiedenen Bildschirmsequenzen, die auf dem Bildschirm 8 des Computers angezeigt werden, dargestellt.

In der Bildschirmsequenz ganz links wird der ein beispielhafter Ausgangsbildschirm gezeigt. Der Benutzer kann durch Wählen einer entsprechenden Schaltfläche 12 in einen Suchmodus gelangen, der in der zweiten Bildschirmsequenz gezeigt wird. Die Schaltfläche 12 wird über ein Eingabemittel 10 am Computer 2, welches hier über einen Touchscreen verwirklicht, angewählt. Neben der Schaltflächen 12 werden hier beispielhaft Sanitärartikel eingeblendet, für welche bereits ein Pairingvorgang stattgefunden hat.

In der zweiten Bildschirmfrequenz werden dem Benutzer vor dem Pairingvorgang alle sich in Reichweite des Computers 2 befindlichen Sanitärartikelsteuerungen 1a bis 1f mittels eines Bildes angezeigt.

Der Benutzer kann in einem Selektionsschnitt die von ihm gewünschte Art der Sanitärartikelsteuerung auswählen. Hierzu wählt der Benutzer auf der zweiten Bildschirmsequenz über ein Eingabemittel 10 am Computer 2, welches hier über einen Touchscreen verwirklicht, ist, die entsprechende Kategorie. Beispielsweise wählt der Benutzer den Button mit der Bezeichnung "WC", was auf eine Toilette hinweist.

In einem nächsten Schritt betätigt dann der Benutzer die Eingabeschnittstelle 5 der gewünschten Sanitärartikelsteuerung. Hierbei wird dem Benutzer auf dem Bildschirm mit dem beispielhaften Text "Bitte halten Sie in den Erfassungsbereich und lösen Sie eine Spülung aus" signalisiert, dass der Benutzer den Erfassungssensor an der Sanitärartikelsteuerung, die er mit dem Computer verbinden möchte, betätigen soll.

Nach erfolgter Betätigung wird dem Benutzer dann in der letzten Bildschirmsequenz bestätigt, dass die Sanitärartikelsteuerung 1a mit dem Computer verbunden ist. Hierzu wird dem Benutzer in der gezeigten Ausführungsform ein beispielhafter Text "WC-Steuerung Sigma 80 ist verbunden" eingeblendet.

Optional kann der Benutzer dann ein Passwort für die Verbindung und/oder einen Produktenamen bzw. eine genaue Bezeichnung, die beispielsweise auf den Standort des Sanitärartikels hinweist, eingeben. Diese Eingaben helfen einerseits eine sichere und geschützte Verbindung mit der Sanitärartikelsteuerung herzustellen und andererseits ein einfaches Identifizieren bei einer späteren Verbindung mit dem Sanitärartikel, da der Name entsprechend vom Benutzer gewählt werden kann. Das Passwort und/oder die Bezeichnung lassen sich über die Datenverbindung D an die Sanitärartikelsteuerung 1a, 1b, 1c, 1d, 1e, 1f übermitteln und werden in einem mit dem Prozessor 3 wirkverbundenen Speicher 11 abgespeichert.

In allgemeinen Worten heisst dies mit Bezug zu Figur 2, dass während des Pairingvorgangs auf dem Bildschirm 8 des Computers 2 alle verfügbaren Sanitärartikelsteuerungen 1a-1f angezeigt werden. Der Benutzer kann dann die Eingabeschnittstelle 5 der gewünschten Sanitärartikelsteuerung 1a betätigen und anschliessend wird auf dem Bildschirm die entsprechende Sanitärartikelsteuerung auf dem Bildschirm angezeigt. Die eigentliche Wahl bzw. Verbindung der Sanitärartikelsteuerung 1a mit dem Computer 2 kann automatisch erfolgen. Das heisst, sobald der Benutzer die Eingabeschnittstelle 5 betätigt hat, wird die Datenverbindung D automatisch hergestellt. Alternativerweise kann auch ein Bestätigungsschritt erforderlich sein, wobei der Benutzer dann über ein Eingabemittel 10 am Computer 2 die angezeigte Sanitärartikelsteuerung 1a auswählt und erst anschliessend die besagte Datenverbindung D hergestellt wird. Hierdurch kann eine Fehlbetätigung nahezu ausgeschlossen werden.

Andere Varianten des Pairing-Vorgangs sind auch denkbar. Beispielhaft werden die folgenden zwei Varianten erwähnt:
- Während dem Pairingvorgang werden auf dem Bildschirm 8 des Computers 2 alle verfügbaren Sanitärartikelsteuerungen 1a-1f angezeigt, wobei der Benutzer eine der Sanitärartikelsteuerungen 1a über ein Eingabemittel 10 am Computer 2 auswählt und anschliessend die entsprechende Eingabeschnittstelle 5 betätigt, wobei bei Übereinstimmung zwischen der ausgewählten Sanitärartikelsteuerungen 1a und der über die Eingabeschnittstelle betätigten Sanitärartikelsteuerungen 1a die besagte Datenverbindung D hergestellt wird.
- Der Benutzer betätigt die Eingabeschnittstelle 5, wobei anschliessend auf dem Bildschirm 8 die betätigte Sanitärartikelsteuerung 1a angezeigt wird, und wobei in einem Schritt der Bestätigung der Benutzer über ein Eingabemittel 10 am Computer 2 die Verbindung zwischen der angezeigten Sanitärartikelsteuerung 1a und dem Computer 2 bestätigt.

Bezüglich der Betätigung der Eingabeschnittstelle 5 sind prinzipiell zwei Varianten denkbar, nämlich dass die Eingabeschnittstelle 5 durch den Benutzer händisch betätigt wird. Weiter ist es auch denkbar, dass die Eingabeschnittstelle 5 bei erstmaliger bei für den Pairingvorgang unterbrochener und wiederhergestellter Stromversorgung der Sanitärartikelsteuerung 1a-1f automatisch für ein bestimmtes Zeitfenster von beispielsweise 1 bis 15 Minuten aktiviert wird. Hierdurch ist dann eine händische Betätigung nicht nötig und der Installateur kann den Pairingvorgang noch einfacher auslösen.

Bei entsprechenden Anlagen, insbesondere bei Grossanlagen, ist es vorteilhaft, wenn die Datenverbindung D ausschliesslich zwischen der einen vom Benutzer gewünschten Sanitärartikelsteuerung 1a und dem Computer 2 hergestellt wird. Das heisst, es existiert dann keine Datenverbindung D zwischen den anderen sich im Raum befindlichen Sanitärartikelsteuerungen 1b bis 1f.

Alternativerweise wäre es aber auch möglich, dass die Datenverbindung D zwischen mehreren vom Benutzer gewünschten Sanitärartikelsteuerungen 1a bis 1f und dem Computer hergestellt wird. Dies ist insbesondere dann von Vorteil, wenn artgleiche Sanitärartikelsteuerungen miteinander verbunden werden und eine gleichgeschaltete Konfiguration für alle Sanitärartikelsteuerungen festzulegen ist.

Bezüglich des Datenaustausches über die Datenverbindung D können Daten von der Sanitärartikelsteuerung 1a-1f bezüglich der Art der Sanitärartikelsteuerung 1-1f bzw. der Art des Sanitärartikels 9a-9f an den Computer 2 übermittelt werden. Basierend auf diesen Daten kann dann der Prozessor des Computers 2 den Gerätespeicher der Sanitärartikelsteuerung oder eine Datenbank abgefragen. Hierbei können dann weitergehende Informationen über den Sanitärartikel auf dem Bildschirm eingeblendet werden. Weitergehende Information können beispielsweise eine Abbildung oder ein Benutzerhandbuch sein.

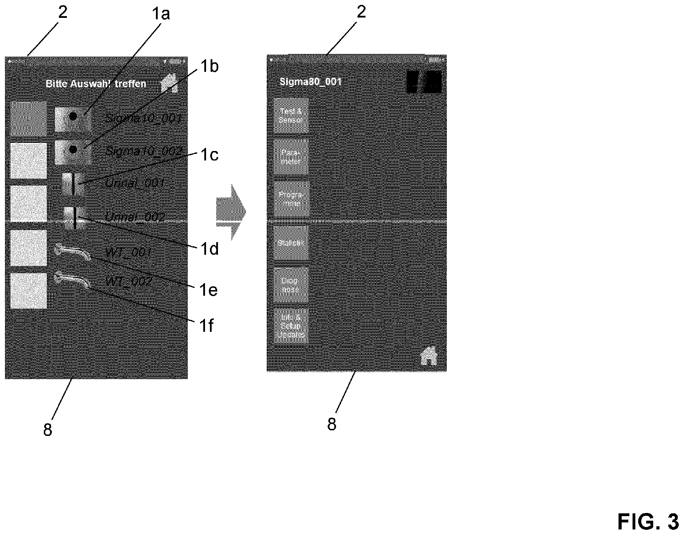

In der Figur 3 wird sodann eine Wiederverbindung zwischen einer bereits einmal verbundenen Sanitärartikelsteuerung gezeigt. Das heisst, es hat bereits erstmal ein PairingVorgang stattgefunden. Auf dem Bildschirm 8 des Computers 2 werden die verfügbaren Sanitärartikelsteuerungen 1a-1f gezeigt. Dies erfolgt, sobald der Computer 2 in Reichweite der Sanitärartikelsteuerungen 1a-1f ist. Für die erneute Herstellung der Datenverbindung D wählt der Benutzer dann die entsprechende Sanitärartikelsteuerung 1a-1f über ein Eingabemittel am Computer aus und die Datenverbindung wird dann wieder hergestellt. Dies erfolgt ohne erneutes Pairing. In der zweiten Bildschirmsequenz auf der Figur 3 rechter Hand wird zudem gezeigt, dass der Benutzer dann in ein Untermenü kommt, in welchem er verschiedene Elemente wählen kann. Hier in der Figur 3 sind die folgenden Elemente dargestellt: Test und Sensor, Parameter, Programme, Statistik, Diagnose, Info und Setup-Updates.

Der Benutzer kann also aus verschiedenen Menüpunkten auswählen und die gewünschte Konfiguration oder Abfrage an der Sanitärartikelsteuerung 1a bis 1f vornehmen.

### BEZUGSZEICHENLISTE

- 1a: zu verbindende Sanitärartikelsteuerung
- 1b-f: Sanitärartikelsteuerung
- 2: Computer
- 3: sanitärartikelseitiger Prozessor
- 4: sanitärartikelseitige drahtlose Kommunikationsschnittstelle
- 5: sanitärartikelseitige Eingabeschnittstelle
- 6: computerseitiger Prozessor
- 7: computerseitige Kommunikationsschnittstelle
- 8: Bildschirm
- 9a-f: Sanitärartikel
- 10: Eingabemittel
- 11: Speicher
- 12: Schaltfläche
- D: Datenverbindung
- R: Raum

## Patentansprüche

1. Verfahren zur Verbindung einer Sanitärartikelsteuerung (1a) mit einem Computer (2) oder zur Verbindung einer Sanitärartikelsteuerung (1a) ausgewählt aus einer Gruppe von mindestens zwei Sanitärartikelsteuerungen (1a, 1b, 1c, 1d, 1e, 1f) mit einem Computer (2),
wobei die Sanitärartikelsteuerung (1a, 1b, 1c, 1d, 1e, 1f) zur Steuerung einer Funktion eines Sanitärartikels (9a, 9b, 9b, 9d, 9d, 9f) konfiguriert ist und mindestens einen Prozessor (3), eine mit dem Prozessor (3) wirkverbundene drahtlose Kommunikationsschnittstelle (4) und eine mit dem Prozessor wirkverbundene Eingabeschnittstelle (5) aufweist,
wobei der Computer (2) mindestens einen Prozessor (6), eine mit dem Prozessor (6) wirkverbundene drahtlose Kommunikationsschnittstelle (7) und einen mit dem Prozessor (6) wirkverbundenen Bildschirm (8) aufweist,
wobei für die Datenverbindung (D) zwischen der zu verbindenden Sanitärartikelsteuerung (1a) und dem Computer (2) ein Pairingvorgang durchgeführt wird,
**dadurch gekennzeichnet, dass** während dem Pairingvorgang die Eingabeschnittstelle (5) der zu verbindenden Sanitärartikelsteuerung (1a) betätigt wird, aufgrund welcher Betätigung die Datenverbindung (D) zwischen der Kommunikationsschnittstelle (4) der besagten Sanitärartikelsteuerung (1a) und der Kommunikationsschnittstelle (7) des Computers (2) hergestellt wird, derart, dass Daten zwischen dem Prozessor (3) der Sanitärartikelsteuerung (1a) und dem Prozessor (6) des Computers (2) austauschbar sind, und
dass die Eingabeschnittstelle (5) ein an der Sanitärartikelsteuerung (1a) angeordneter Erfassungssensor ist, der zur Erkennung eines Benutzers eines mit der Sanitärartikelsteuerung verbundenen Sanitärartikels (9a, 9b, 9c, 9d, 9e, 9f) ausgebildet ist.

2. Verfahren nach Anspruch 1, **dadurch gekennzeichnet, dass** während des Pairingvorgangs bei Betätigung des Erfassungssensors (5) keine sanitäre Funktion ausgeführt wird; oder dass die Sanitärartikelsteuerung derart konfiguriert ist, dass während des Pairingvorgangs bei Betätigung des Erfassungssensors (5) gleichwohl eine sanitäre Funktion ausgeführt ist.

3. Verfahren nach einem der vorhergehenden Ansprüche, **dadurch gekennzeichnet, dass** vor dem Pairingvorgang dem Benutzer die Art der verfügbaren Sanitärartikelsteuerungen (1a, 1b, 1c, 1d, 1e, 1f) auf dem Bildschirm (8) angezeigt wird, wobei der Benutzer in einem Selektionsschritt die von ihm gewünschte Art der Sanitärartikelsteuerung (1a, 1b, 1c, 1d, 1e, 1f) auswählt und wobei anschliessend der Pairingvorgang basierend auf der Benutzerwahl in der Gruppe der vom Benutzer gewünschten Art der Sanitärartikelsteuerung (1a, 1b, 1c, 1d, 1e, 1f) durchgeführt wird.

4. Verfahren nach einem der vorhergehenden Ansprüche 1 bis 3, **dadurch gekennzeichnet, dass** während des Pairingvorgangs auf dem Bildschirm (8) des Computers (2) alle verfügbaren Sanitärartikelsteuerungen (1a, 1b, 1c, 1d, 1e, 1f) angezeigt werden,
wobei der Benutzer die Eingabeschnittstelle (5) betätigt und dem Benutzer anschliessend die entsprechende Sanitärartikelsteuerung (1a) auf dem Bildschirm (8) angezeigt wird,
wobei die entsprechende Sanitärartikelsteuerung (1a) automatisch ausgewählt wird und anschliessend die besagte Datenverbindung (D) hergestellt wird; oder wobei der Benutzer über ein Eingabemittel (10) am Computer (2) die angezeigte Sanitärartikelsteuerung (1a) auswählt und anschliessend die besagte Datenverbindung (D) hergestellt wird.

5. Verfahren nach einem der vorhergehenden Ansprüche 1 oder 3, **dadurch gekennzeichnet, dass** während des Pairingvorgangs auf dem Bildschirm (8) des Computers (2) alle verfügbaren Sanitärartikelsteuerungen (1a, 1b, 1c, 1d, 1e, 1f) angezeigt werden,
wobei der Benutzer eine der Sanitärartikelsteuerungen (1a) über ein Eingabemittel (10) am Computer (2) auswählt und anschliessend die entsprechende Eingabeschnittstelle (5) betätigt, wobei bei Übereinstimmung zwischen der ausgewählten Sanitärartikelsteuerungen (1a) und der über die Eingabeschnittstelle betätigten Sanitärartikelsteuerungen (1a) die besagte Datenverbindung (D) hergestellt wird.

6. Verfahren nach einem der vorhergehenden Ansprüche 1 bis 3, **dadurch gekennzeichnet,**
**dass** der Benutzer die Eingabeschnittstelle (5) betätigt, wobei anschliessend auf dem Bildschirm (8) die betätigte Sanitärartikelsteuerung (1a) angezeigt wird, und wobei in einem Schritt der Bestätigung über ein Eingabemittel (10) am Computer (2) der Benutzer die Verbindung zwischen der angezeigten Sanitärartikelsteuerung (1a) und dem Computer (2) bestätigt; oder
**dass** der Benutzer die Eingabeschnittstelle (5) betätigt, wobei anschliessend auf dem Bildschirm (8) die betätigte Sanitärartikelsteuerung (1a) angezeigt wird und wobei anschliessend ein an der Sanitärartikelsteuerung angebrachtes Codemittel über ein Eingabemittel am Computer eingegeben wird, wobei in einem Abgleichschritt das eingegebene Codemittel mit einem in der Sanitärartikelsteuerung (1a) gespeicherten Codemittel abgeglichen wird und wobei bei Übereinstimmung die Verbindung die Verbindung zwischen der angezeigten Sanitärartikelsteuerung (1a) und dem Computer (2) bestätigt wird.

7. Verfahren nach einem der vorhergehenden Ansprüche, **dadurch gekennzeichnet, dass** die Eingabeschnittstelle (5) durch den Benutzer händisch betätigt wird; und/oder dass die Eingabeschnittstelle (5) bei erstmaliger oder bei für den Pairingvorgang unterbrochener und wiederhergestellter Stromversorgung der Sanitärartikelsteuerung (1a, 1b, 1c, 1d, 1e, 1f) automatisch für ein bestimmtes Zeitfenster aktiviert wird.

8. Verfahren nach einem der vorhergehenden Ansprüche, **dadurch gekennzeichnet, dass** die Datenverbindung (D) ausschliesslich zwischen der einen vom Benutzer gewünschten Sanitärartikelsteuerung (1a) und dem Computer (2) hergestellt wird; oder dass die Datenverbindung (D) ausschliesslich zwischen mehreren vom Benutzer gewünschten Sanitärartikelsteuerungen (1a, 1b, 1c, 1d, 1e, 1f) und dem Computer (2) hergestellt wird.

9. Verfahren nach einem der vorhergehenden Ansprüche, **dadurch gekennzeichnet, dass** nach dem Herstellen der Datenverbindung (D) über ein Eingabemittel (10) des Computer (2) ein Passwort für den Zugang zu der Sanitärartikelsteuerung (1a, 1b, 1c, 1d, 1e, 1f) festgelegt wird, wobei das Passwort über die Datenverbindung (D) an die Sanitärartikelsteuerung (1a, 1b, 1c, 1d, 1e, 1f) übermittelt wird und in einem mit dem Prozessor (3) wirkverbundenen Speicher (11) abgespeichert wird.

10. Verfahren nach einem der vorhergehenden Ansprüche, **dadurch gekennzeichnet, dass** nach dem Herstellen der Datenverbindung (D) über ein Eingabemittel (10) des Computer (2) eine benutzerspezifische Bezeichnung für die gewählte Sanitärartikelsteuerung (1a, 1b, 1c, 1d, 1e, 1f) festgelegt wird, wobei die Bezeichnung über die Datenverbindung (D) an die Sanitärartikelsteuerung (1a, 1b, 1c, 1d, 1e, 1f) übermittelt wird und in einem mit dem Prozessor (3) wirkverbundenen Speicher (10) abgespeichert wird.

11. Verfahren nach einem der vorhergehenden Ansprüche, **dadurch gekennzeichnet, dass** von der Sanitärartikelsteuerung (1a, 1b, 1c, 1d, 1e, 1f) Daten bezüglich der Art der Sanitärartikelsteuerung an den Computer (2) übermittelt werden, wobei basierend auf diesen Daten durch den Prozessor (6) des Computers (2) der Speicher der Sanitärartikelsteuerung (1a, 1b, 1c, 1d, 1e, 1f) oder eine Datenbank abgefragt wird und wobei weitergehende Informationen über die Sanitärartikelsteuerung auf dem Bildschirm (8) eingeblendet werden.

12. Verfahren nach einem der vorhergehenden Ansprüchen, **dadurch gekennzeichnet**, die Sanitärartikelsteuerung bzw. die Sanitärartikelsteuerungen, mit welchen bereits erstmalig ein Pairingvorgang stattgefunden hat, auf dem Bildschirm (8) des Computers (2) angezeigt werden, sobald der Computer (2) in Reichweite der Sanitärartikelsteuerung bzw. der Sanitärartikelsteuerungen ist, wobei für die erneute Herstellung der Datenverbindung (D) der Benutzer die entsprechende Sanitärartikelsteuerung bzw. die entsprechenden Sanitärartikelsteuerungen über ein Eingabemittel (10) am Computer (2) auswählt, und wobei nach Auswahl der Sanitärartikelsteuerung bzw. den Sanitärartikelsteuerungen die besagte Datenverbindung (D) wieder hergestellt wird.

13. System, umfassend einen Computer und eine Sanitärartikelsteuerung zur Verbindung der Sanitärartikelsteuerung (1a) mit dem Computer (2) oder zur Verbindung der Sanitärartikelsteuerung (1a) ausgewählt aus einer Gruppe von mindestens zwei Sanitärartikelsteuerungen (1a, 1b, 1c, 1d, 1e, 1f), mit dem Computer (2),
wobei die Sanitärartikelsteuerung (1a, 1b, 1c, 1d, 1e, 1f) zur Steuerung einer Funktion eines Sanitärartikels konfiguriert ist und mindestens einen Prozessor (3), eine mit dem Prozessor wirkverbundene drahtlose Kommunikationsschnittstelle (4) und eine mit dem Prozessor wirkverbundene Eingabeschnittstelle (5) aufweist,
wobei der Computer (2) mindestens einem Prozessor (6), eine mit dem Prozessor (6) wirkverbundene drahtlose Kommunikationsschnittstelle (7) und einen mit dem Prozessor (6) wirkverbundenen Bildschirm (8) aufweist,
wobei die Sanitärartikelsteuerung (1a) und der Computer (2) derart konfiguriert sind, dass für die Datenverbindung (D) zwischen der zu verbindenden Sanitärartikelsteuerung (1a) und dem Computer (2) ein Pairingvorgang durchgeführt wird,
**dadurch gekennzeichnet, dass** die Eingabeschnittstelle (5) der zu verbindenden Sanitärartikelsteuerung (1a) derart ausgebildet ist um während des Pairingvorgangs betätigt zu werden, aufgrund welcher Betätigung die Datenverbindung (D) zwischen der Kommunikationsschnittstelle (4) der besagten Sanitärartikelsteuerung (1a) und der Kommunikationsschnittstelle (7) des Computers (2) herstellbar ist, derart, dass Daten zwischen dem Prozessor (3) der Sanitärartikelsteuerung (1a) und dem Prozessor (6) des Computers (2) ausgetauscht werden und
wobei die Eingabeschnittstelle (5) ein an der Sanitärartikelsteuerung (1a) angeordneter Erfassungssensor ist, der zur Erkennung eines Benutzers eines mit der Sanitärartikelsteuerung verbundenen Sanitärartikels (9a, 9b, 9c, 9d, 9e, 9f) ausgebildet ist.

14. Computerprogrammprodukt umfassend: ein computerlesbares Medium mit darin enthaltenen Computerprogrammcodemitteln zur Steuerung eines oder mehrerer Prozessoren eines Computers nach einem der vorhergehenden Ansprüche 1 bis 12 welcher Computer (2) mindestens einen Prozessor (6), eine mit dem Prozessor (6) wirkverbundene drahtlose Kommunikationsschnittstelle (7) und einen mit dem Prozessor (6) wirkverbundenen Bildschirm (8) umfasst,
wobei das Computerprogrammcodemittel zur Verbindung einer Sanitärartikelsteuerung (1a) ausgewählt aus einer Gruppe von mindestens einer Sanitärartikelsteuerung (1a), insbesondere ausgewählt aus einer Gruppe von mindestens zwei Sanitärartikelsteuerungen (1a, 1b, 1c, 1d, 1e, 1f), mit dem Computer (2) ausgebildet ist.

15. Sanitärartikel umfassend ein System nach Anspruch 13, wobei der Sanitärartikel zum Ausführen des Verfahrens nach einem der Ansprüche 1 bis 12 ausgebildet ist. (1a, 1b, 1c, 1d, 1e, 1f).

## Claims

1. Method for connecting a sanitary article control (1a) to a computer (2) or for connecting a sanitary article control (1a) selected from a group of at least two sanitary article controls (1a, 1b, 1c, 1d, 1e, 1f) to a computer (2),
wherein the sanitary article control (1a, 1b, 1c, 1d, 1e, 1f) is configured to control a function of a sanitary article (9a, 9b, 9b, 9d, 9d, 9f) and has at least one processor (3), a wireless communication interface (4) operatively connected to the processor (3), and an input interface (5) operatively connected to the processor,
wherein the computer (2) has at least one processor (6), a wireless communication interface (7) operatively connected to the processor (6), and a screen (8) operatively connected to the processor (6),
wherein a pairing process is performed for the data connection (D) between the sanitary article control (1a) to be connected and the computer (2),
**characterized in that** during the pairing process, the input interface (5) of the sanitary article control (1a) to be connected is actuated, as a result of which actuation the data connection (D) between the communication interface (4) of said sanitary article control (1a) and the communication interface (7) of the computer (2) is established in such a way that data can be exchanged between the processor (3) of the sanitary article control (1a) and the processor (6) of the computer (2), and
the input interface (5) is a detection sensor arranged on the sanitary article control (1a), which is configured to recognize a user of a sanitary article (9a, 9b, 9c, 9d, 9e, 9f) connected to the sanitary article control.

2. Method according to claim 1, **characterized in that** no sanitary function is performed during the pairing process when the detection sensor (5) is activated; or that the sanitary article control is configured in such a way that a sanitary function is nevertheless performed during the pairing process when the detection sensor (5) is activated.

3. Method according to one of the preceding claims, **characterized in that**, prior to the pairing process, the type of available sanitary article controls (1a, 1b, 1c, 1d, 1e, 1f) is displayed on the screen (8), whereby the user selects the desired type of sanitary article control (1a, 1b, 1c, 1d, 1e, 1f) in a selection step and the pairing process is then carried out based on the user's selection in the group of sanitary article controls (1a, 1b, 1c, 1d, 1e, 1f) desired by the user.

4. Method according to one of the preceding claims 1 to 3, **characterized in that** during the pairing process, all available sanitary article controls (1a, 1b, 1c, 1d, 1e, 1f) are displayed on the screen (8) of the computer (2),
wherein the user operates the input interface (5) and the corresponding sanitary article control (1a) is then displayed to the user on the screen (8),
wherein the corresponding sanitary article control (1a) is automatically selected and then the said data connection (D) is established; or wherein the user selects the displayed sanitary article control (1a) via an input means (10) on the computer (2) and then the said data connection (D) is established.

5. Method according to one of the preceding claims 1 or 3, **characterized in that** during the pairing process, all available sanitary article controls (1a, 1b, 1c, 1d, 1e, 1f) are displayed on the screen (8) of the computer (2),
wherein the user selects one of the sanitary article controls (1a) via an input device (10) on the computer (2) and then activates the corresponding input interface (5), wherein, if there is a match between the selected sanitary article control (1a) and the sanitary article control (1a) activated via the input interface, the said data connection (D) is established.

6. Method according to one of the preceding claims 1 to 3, characterized
that the user activates the input interface (5), whereupon the activated sanitary article control (1a) is displayed on the screen (8), and in a confirmation step via an input device (10) on the computer (2), the user confirms the connection between the displayed sanitary article control (1a) and the computer (2); or
the user operates the input interface (5), whereupon the operated sanitary article control (1a) is displayed on the screen (8) and a code means attached to the sanitary article control is then entered via an input means on the computer, wherein in a comparison step the entered code means is compared with a code means stored in the sanitary article control (1a), and if they match, the connection between the displayed sanitary article control (1a) and the computer (2) is confirmed.

7. Method according to one of the preceding claims, **characterized in that** the input interface (5) is operated manually by the user; and/or that the input interface (5) is automatically activated for a specific time window when the power supply to the sanitary article control unit (1a, 1b, 1c, 1d, 1e, 1f) is interrupted and restored for the first time or for the pairing process.

8. Method according to one of the preceding claims, **characterized in that** the data connection (D) is established exclusively between the one sanitary article control (1a) desired by the user and the computer (2); or that the data connection (D) is established exclusively between several sanitary article controls (1a, 1b, 1c, 1d, 1e, 1f) desired by the user and the computer (2).

9. Method according to one of the preceding claims, **characterized in that**, after establishing the data connection (D), a password for accessing the sanitary article control (1a, 1b, 1c, 1d, 1e, 1f) is set via an input device (10) of the computer (2) 1f) is set , whereby the password is transmitted to the sanitary article control (1a, 1b, 1c, 1d, 1e, 1f) via the data connection (D) and stored in a memory (11) operatively connected to the processor (3).

10. Method according to one of the preceding claims, **characterized in that**, after establishing the data connection (D) via an input device (10) of the computer (2), a user-specific designation for the selected sanitary article control (1a, 1b, 1c, 1d, 1e, 1f) is specified, wherein the designation is transmitted to the sanitary article control (1a, 1b, 1c, 1d, 1e, 1f) via the data connection (D) and stored in a memory (10) operatively connected to the processor (3).

11. Method according to one of the preceding claims, **characterized in that** data relating to the type of sanitary article control (1a, 1b, 1c, 1d, 1e, 1f) transmits data relating to the type of sanitary article control to the computer (2), whereby, based on this data, the processor (6) of the computer (2) queries the memory of the sanitary article control (1a, 1b, 1c, 1d, 1e, 1f) or a database is queried based on this data, and further information about the sanitary article control is displayed on the screen (8).

12. Method according to one of the preceding claims, **characterized in that** the sanitary article control or the sanitary article controls with which a pairing process has already taken place for the first time are displayed on the screen (8) of the computer (2) as soon as the computer (2) is within range of the sanitary article control or the sanitary article controls, wherein, in order to re-establish the data connection (D), the user selects the corresponding sanitary article control or controls via an input device (10) on the computer (2), and wherein, after selecting the sanitary article control or controls, the said data connection (D) is re-established.

13. System comprising a computer and a sanitary article control for connecting the sanitary article control (1a) to the computer (2) or for connecting the sanitary article control (1a) selected from a group of at least two sanitary article controls (1a, 1b, 1c, 1d, 1e, 1f) to the computer (2),
wherein the sanitary article control (1a, 1b, 1c, 1d, 1e, 1f) is configured to control a function of a sanitary article and has at least one processor (3), a wireless communication interface (4) operatively connected to the processor, and an input interface (5) operatively connected to the processor,
wherein the computer (2) comprises at least one processor (6), a wireless communication interface (7) operatively connected to the processor (6), and a display screen (8) operatively connected to the processor (6),
wherein the sanitary article control (1a) and the computer (2) are configured such that a pairing process is performed for the data connection (D) between the sanitary article control (1a) to be connected and the computer (2),
**characterized in that** the input interface (5) of the sanitary article control (1a) to be connected is configured to be actuated during the pairing process, whereby the data connection (D) between the communication interface (4) of said sanitary article control (1a) and the communication interface (7) of the computer (2) can be established, such that data is exchanged between the processor (3) of the sanitary article control (1a) and the processor (6) of the computer (2), and
wherein the input interface (5) is a detection sensor arranged on the sanitary article control (1a), which is configured to detect a user of a sanitary article (9a, 9b, 9c, 9d, 9e, 9f) connected to the sanitary article control.

14. Computer program product comprising: a computer-readable medium containing computer program code means for controlling one or more processors of a computer according to any of the preceding claims 1 to 12, which computer (2) has at least one processor (6), a wireless communication interface (7) operatively connected to the processor (6), and a screen (8) operatively connected to the processor (6),
wherein the computer program code means is configured to connect a sanitary article control (1a) selected from a group of at least one sanitary article control (1a), in particular selected from a group of at least two sanitary article controls (1a, 1b, 1c, 1d, 1e, 1f), to the computer (2).

15. Sanitary article comprising a system according to claim 13, wherein the sanitary article is configured to perform the method according to any one of claims 1 to 12.

## Revendications

1. Procédé pour connecter une commande d'articles sanitaires (1a) à un ordinateur (2) ou pour connecter une commande d'articles sanitaires (1a) sélectionnée parmi un groupe d'au moins deux commandes d'articles sanitaires (1a, 1b, 1c, 1d, 1e, 1f) à un ordinateur (2),
les commandes d'articles sanitaires (1a, 1b, 1c, 1d, 1e, 1f) étant configurées pour commander une fonction d'un article sanitaire (9a, 9b, 9b, 9d, 9d, 9f) et comportant au moins un processeur (3), une interface de communication sans fil (4) reliée de manière fonctionnelle au processeur (3) et une interface de saisie (5) reliée de manière fonctionnelle au processeur,
l'ordinateur (2) comportant au moins un processeur (6), une interface de communication sans fil (7) reliée fonctionnellement au processeur (6) et un écran (8) relié fonctionnellement au processeur (6),
une procédure d'appairage étant effectuée pour la connexion de données (D) entre la commande d'articles sanitaires (1a) à connecter et l'ordinateur (2),
**caractérisé en ce que**, pendant le processus d'appairage, l'interface de saisie (5) de la commande d'articles sanitaires (1a) à connecter est actionnée, ce qui entraîne l'établissement de la connexion de données (D) entre l'interface de communication (4) de ladite commande d'articles sanitaires (1a) et l'interface de communication (7) de l'ordinateur (2) de telle sorte que les données puissent être échangées entre le processeur (3) de la commande d'articles sanitaires (1a) et le processeur (6) de l'ordinateur (2), et
que l'interface de saisie (5) est un capteur de détection disposé sur la commande d'articles sanitaires (1a), qui est conçu pour reconnaître un utilisateur d'un article sanitaire (9a, 9b, 9c, 9d, 9e, 9f) relié à la commande d'articles sanitaires.

2. Procédé selon la revendication 1, **caractérisé en ce que**, pendant le processus d'appairage, aucune fonction sanitaire n'est exécutée lorsque le capteur de détection (5) est actionné ; ou **en ce que** la commande d'articles sanitaires est configurée de telle sorte que, pendant le processus d'appairage, une fonction sanitaire est néanmoins exécutée lorsque le capteur de détection (5) est actionné.

3. Procédé selon l'une quelconque des revendications précédentes, **caractérisé en ce que**, avant le processus d'appairage, le type de commandes d'articles sanitaires disponibles (1a, 1b, 1c, 1d, 1e, 1f) est affiché à l'écran (8), l'utilisateur sélectionnant, lors d'une étape de sélection, le type de commande d'articles sanitaires (1a, 1b, 1c, 1d, 1e, 1f) souhaité par l'utilisateur, puis le processus d'appairage est effectué sur la base du choix de l'utilisateur dans le groupe du type de commande d'articles sanitaires (1a, 1b, 1c, 1d, 1e, 1f) souhaité par l'utilisateur.

4. Procédé selon l'une des revendications 1 à 3 précédentes, **caractérisé en ce que** pendant le processus d'appairage, toutes les commandes d'articles sanitaires disponibles (1a, 1b, 1c, 1d, 1e, 1f) sont affichées sur l'écran (8) de l'ordinateur (2),
l'utilisateur actionnant l'interface de saisie (5) et la commande d'articles sanitaires correspondante (1a) s'affichant à utilisateur ensuite à l'écran (8),
la commande d'articles sanitaires correspondante (1a) étant sélectionnée automatiquement, puis ladite connexion de données (D) étant établie ; ou l'utilisateur sélectionnant la commande d'articles sanitaires affichée (1a) à l'aide d'un moyen de saisie (10) sur l'ordinateur (2), puis ladite connexion de données (D) étant établie.

5. Procédé selon l'une des revendications 1 ou 3 précédentes, **caractérisé en ce que** pendant le processus d'appairage, toutes les commandes d'articles sanitaires disponibles (1a, 1b, 1c, 1d, 1e, 1f) sont affichées sur l'écran (8) de l'ordinateur (2),
l'utilisateur sélectionnant l'une des commandes d'articles sanitaires (1a) via un moyen de saisie (10) sur l'ordinateur (2) et actionnant ensuite l'interface de saisie correspondante (5), ladite connexion de données (D) étant établie en cas de concordance entre la commande d'articles sanitaires sélectionnée (1a) et la commande d'articles sanitaires actionnée via l'interface de saisie (1a).

6. Procédé selon l'une des revendications 1 à 3 précédentes, **caractérisé en ce que**
l'utilisateur actionne l'interface de saisie (5), la commande d'articles sanitaires actionnée (1a) s'affichant ensuite à l'écran (8), et l'utilisateur confirmant, lors d'une étape de confirmation via un moyen de saisie (10) sur l'ordinateur (2), la connexion entre la commande d'articles sanitaires affichée (1a) et l'ordinateur (2) ; ou
que l'utilisateur actionne l'interface de saisie (5), après quoi la commande d'articles sanitaires actionnée (1a) s'affiche à l'écran (8) et un moyen de codage fixé à la commande d'articles sanitaires est ensuite saisi sur l'ordinateur via un moyen de saisie, le moyen de codage saisi étant comparé, lors d'une étape de comparaison, à un moyen de codage enregistré dans la commande d'articles sanitaires (1a) et, en cas de concordance, la connexion entre la commande d'articles sanitaires affichée (1a) et l'ordinateur (2) étant confirmée.

7. Procédé selon l'une quelconque des revendications précédentes, **caractérisé en ce que** l'interface de saisie (5) est actionnée manuellement par l'utilisateur ; et/ou **en ce que** l'interface de saisie (5) est activée automatiquement pendant un certain laps de temps lors de la première mise sous tension ou lors de la reprise de l'alimentation électrique interrompue pour le processus d'appairage de la commande d'articles sanitaires (1a, 1b, 1c, 1d, 1e, 1f).

8. Procédé selon l'une quelconque des revendications précédentes, **caractérisé en ce que** la connexion de données (D) est établie exclusivement entre la commande d'articles sanitaires (1a) souhaitée par l'utilisateur et l'ordinateur (2) ; ou **en ce que** la connexion de données (D) est établie exclusivement entre plusieurs commandes d'articles sanitaires (1a, 1b, 1c, 1d, 1e, 1f) souhaitées par l'utilisateur et l'ordinateur (2).

9. Procédé selon l'une quelconque des revendications précédentes, **caractérisé en ce qu'**après l'établissement de la connexion de données (D), un mot de passe pour l'accès à la commande d'articles sanitaires (1a, 1b, 1c, 1d, 1e, 1f) est défini via un moyen de saisie (10) de l'ordinateur (2) 1f) est défini, le mot de passe étant transmis à la commande d'articles sanitaires (1a, 1b, 1c, 1d, 1e, 1f) via la connexion de données (D) et étant enregistré dans une mémoire (11) reliée de manière fonctionnelle au processeur (3).

10. Procédé selon l'une quelconque des revendications précédentes, **caractérisé en ce qu'**après l'établissement de la liaison de données (D) via un moyen de saisie (10) de l'ordinateur (2), une désignation spécifique à l'utilisateur est définie pour la commande d'articles sanitaires sélectionnée (1a, 1b, 1c, 1d, 1e, 1f), la désignation étant transmise à la commande d'articles sanitaires (1a, 1b, 1c, 1d, 1e, 1f) via la connexion de données (D) et étant enregistrée dans une mémoire (10) reliée au processeur (3).

11. Procédé selon l'une quelconque des revendications précédentes, **caractérisé en ce que** des données concernant le type de commande d'articles sanitaires (1a, 1b, 1c, 1d, 1e, 1f) sont transmises à l'ordinateur (2), la mémoire de la commande d'articles sanitaires (1a, 1b, 1c, 1d, 1e, 1f) ou une base de données étant interrogée et des informations complémentaires sur la commande d'articles sanitaires sont affichées à l'écran (8).

12. Procédé selon l'une quelconque des revendications précédentes, **caractérisé en ce que** la ou les commandes d'articles sanitaires avec lesquelles un processus d'appairage a déjà eu lieu pour la première fois s'affichent sur l'écran (8) de l'ordinateur (2) dès que l'ordinateur (2) se trouve à portée de la ou des commandes d'articles sanitaires, l'utilisateur sélectionnant la ou les commandes d'articles sanitaires correspondantes via un moyen de saisie (10) sur l'ordinateur (2) afin de rétablir la connexion de données (D), et ladite connexion de données (D) étant rétablie après la sélection de la ou des commandes d'articles sanitaires.

13. Système comprenant un ordinateur et une commande d'articles sanitaires pour connecter la commande d'articles sanitaires (1a) à l'ordinateur (2) ou pour connecter la commande d'articles sanitaires (1a) sélectionnée parmi un groupe d'au moins deux commandes d'articles sanitaires (1a, 1b, 1c, 1d, 1e, 1f) à l'ordinateur (2),
la commande d'articles sanitaires (1a, 1b, 1c, 1d, 1e, 1f) étant configuré pour commander une fonction d'un article sanitaire et comportant au moins un processeur (3), une interface de communication sans fil (4) reliée de manière fonctionnelle au processeur et une interface de saisie (5) reliée de manière fonctionnelle au processeur,
l'ordinateur (2) comportant au moins un processeur (6), une interface de communication sans fil (7) reliée de manière fonctionnelle au processeur (6) et un écran (8) relié de manière fonctionnelle au processeur (6),
la commande d'articles sanitaires (1a) et l'ordinateur (2) étant configurés de telle sorte qu'un processus d'appairage soit effectué pour la connexion de données (D) entre la commande d'articles sanitaires (1a) à connecter et l'ordinateur (2),
**caractérisé en ce que** l'interface de saisie (5) de la commande d'articles sanitaires (1a) à connecter est configurée pour être actionnée pendant le processus d'appairage,
sur la base de quelle action la connexion de données (D) entre l'interface de communication (4) de ladite commande d'articles sanitaires (1a) et l'interface de communication (7) de l'ordinateur (2) peut être établie de telle sorte que des données soient échangées entre le processeur (3) de la commande d'articles sanitaires (1a) et le processeur (6) de l'ordinateur (2) et
l'interface de saisie (5) étant un capteur de détection disposé sur la commande d'articles sanitaires (1a), qui est conçu pour reconnaître un utilisateur d'un article sanitaire (9a, 9b, 9c, 9d, 9e, 9f) relié à la commande d'articles sanitaires.

14. Produit logiciel comprenant : un support lisible par ordinateur contenant des moyens de code de programme informatique pour commander un ou plusieurs processeurs d'un ordinateur selon l'une des revendications 1 à 12 précédentes, lequel ordinateur (2) comprend au moins un processeur (6), une interface de communication sans fil (7) reliée de manière fonctionnelle au processeur (6) et un écran (8) relié de manière fonctionnelle au processeur (6),
les moyens de code de programme informatique étant configurés pour connecter une commande d'articles sanitaires (1a) choisie parmi un groupe d'au moins une commande d'articles sanitaires (1a), en particulier choisie parmi un groupe d'au moins deux commandes d'articles sanitaires (1a, 1b, 1c, 1d, 1e, 1f), à l'ordinateur (2).

15. Article sanitaire comprenant un système selon la revendication 13, l'article sanitaire étant conçu pour exécuter le procédé selon l'une des revendications 1 à 12.
